(19) Europäisches Patentamt
European Patent Office
Office européen des brevets

(11) **EP 4 681 547 A1**

(12) **DEMANDE DE BREVET EUROPEEN**

(43) Date de publication:
**21.01.2026 Bulletin 2026/04**

(21) Numéro de dépôt: **25189662.7**

(22) Date de dépôt: **15.07.2025**

(51) Classification Internationale des Brevets (IPC):
**A23D 7/00** (2006.01)       **A23D 7/05** (2006.01)

(52) Classification Coopérative des Brevets (CPC):
**A23D 7/001; A23D 7/05**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **16.07.2024 FR 2407797**

(71) Demandeurs:
• **St. Hubert**
**94150 Rungis (FR)**
• **Université de Lorraine**
**54000 Nancy (FR)**

(72) Inventeurs:
• **GERLEI, Maureen**
**54530 Pagny-sur-Moselle (FR)**
• **FEESER, Marion**
**54000 Nancy (FR)**
• **KAHN, Cyril**
**54000 Nancy (FR)**
• **LINDER, Michel**
**54740 54740, Lemainville (FR)**
• **PREVOT, Eulalie**
**54180 Heilleco (FR)**
• **LEMOIS, Béatrice**
**54380 Bezaumont (FR)**

(74) Mandataire: **Barbot, Willy**
**Simodoro-ip**
**82, rue Sylvabelle**
**13006 Marseille (FR)**

(54) **PROCEDE D OBTENTION D'UNE EMULSION EAU-DANS-HUILE A BASE D HUILE VEGETALE ET DE STEARINE DE BEURRE**

(57) La présente invention concerne une émulsion eau-dans huile de type matière grasse tartinable, dont la teneur en matière grasse est comprise entre 30 % et 70 % (en poids par rapport au poids total de l'émulsion), ne comprenant aucune matière grasse concrète « exotique » d'origine végétale, et dont la phase grasse comprend du beurre ou de la MGLA (CB), de la stéarine de MGLA (SB) présentant un point de goutte compris entre 37 et 45 °C, et une huile végétale (HV) ; où le mélange (M) de (HV), de (SB) et de (CB) représente au moins 90% en poids de la phase grasse avec :

1) La proportion (HV) allant de 20 à 75% (en poids) du mélange (M),

2) La proportion (SB) allant de 5 à 65 % (en poids) du mélange (M),

3) La proportion (CB) allant de 5 à 65% (en poids) du mélange (M), et

4) La somme (SB) + (CB) allant de 25 à 80% (en poids) du mélange (M).

Figure 1

## Description

La présente demande de brevet revendique la priorité de la demande de brevet Français FR 2407797 déposée le 16 juillet 2024.

## Domaine de l'invention

La présente invention est relative au domaine des émulsions eau-dans-huile comestibles à base d'huiles végétales.

## Arrière-plan technologique de l'invention

La population française reste avec les néozélandais les plus gros consommateurs de beurre au monde avec 8,2 kg de beurre par an et par habitant. Différentes catégories de beurre sont présentes sur le marché français produites en baratte ou en butyrateur continu, salées ou non, d'origine bovine majoritairement, mais on retrouve également des beurres d'origine caprine ou d'ovins avec des Appellations d'Origine Contrôlée. Les tendances actuelles portent sur une large gamme de textures rendues possibles par des formulations allégées à base de beurre avec différentes proportions d'eau, en jouant sur les beurres d'hiver ou d'été dont les compositions en acides gras varient. Il faut rappeler que seules des opérations mécaniques sont autorisées pour la transformation de la crème en beurre.

Face au marché du beurre, il existe un grand nombre de produits pour répondre à la demande sociétale et particulièrement en France où la gastronomie et la cuisine représentent des valeurs traditionnelles. Les margarines représentent le secteur concurrentiel avec une consommation stabilisée autour de 2,7 kg/habitant/an. Née en 1869 en France à la suite à un concours organisé par Napoléon III pour remplacer le beurre, Hyppolyte MEGE-MOURIES invente une formulation émulsionnée de graisse de bœuf et de lait qu'il commercialisera sous l'appellation « Margarine ». Les margarines sont des émulsions eau-dans-huile auxquelles des additifs peuvent être rajoutés et dont la phase lipidique doit être comprise entre 10 et 90 %. De multiples margarines existent ainsi sur le marché pour concurrencer le beurre, lesquelles sont associées à une importante diversité de goûts, de textures, et d'huiles végétales utilisées, notamment en fonction des allégations santé revendiquées et/ou recommandées par les nutritionnistes. Aujourd'hui, la sélection des huiles végétales utilisées (huiles de tournesol, tournesol oléique, colza, olive, lin et algale) permet d'apporter un rapport en acides gras oméga 6 et oméga 3 équilibré, tel que recommandé par l'ANSES. Toutefois, il est cependant indispensable d'associer à cette sélection d'huiles végétales, une ou un mélange de matières grasses concrètes (sous forme solide à 15 °C) d'origine animale (ex : beurre) ou d'origine végétale (palme, palmiste, karité, coprah). Ces matières grasses concrètes sont essentielles pour permettre de structurer la margarine et apporter les propriétés technofonctionnelles recherchées.

Maintenant, la prise en compte des problématiques écologiques conduit à privilégier des ingrédients qui, au-delà de leur seule valeur nutritionnelle, bénéficient d'une production la plus responsable possible (ex : sans déforestation) et, également, dont la distance du lieu de leur utilisation est la plus raisonnable possible.

Dans cette perspective, il est souhaitable d'obtenir une émulsion eau-dans-huile qui n'intègre pas de matières grasses concrètes « exotiques » d'origine végétale, lesquelles matières grasses concrètes d'origine végétale obtenues à partir de culture sur le continent Européen. De la sorte, on privilégie une utilisation plus raisonnée de la ressource en veillant à permettre une autonomie régionale conformément à la stratégie dite du « Farm to Fork ».

Pour se faire, il est souhaitable d'obtenir une émulsion eau-dans-huile présentant un contenu raisonnable en beurre, mais intégrant également des huiles végétales bénéficiant de contenus lipidiques d'intérêt (graisses insaturées, notamment Oméga 3), avec pour objectif d'obtenir des émulsions présentant une composition particulièrement adaptée aux besoins des individus, le tout en présentant les meilleures propriétés organoleptiques possibles.

Un tel développement n'a rien d'évident en soi, sachant que lorsqu'on envisage la formulation et la fabrication d'une émulsion eau-dans-huile, le choix des matières grasses joue un rôle primordial pour les caractéristiques du produit final obtenu (pour une revue, voir notamment HUI et al., Bailey's Industrial Oil and Fat Products, Edible Oil and Fat Products : General Applications vol.4, p : 491-568, 1996)

## Sommaire de l'invention

Les inventeurs ont mis en évidence qu'une stéarine de beurre particulière, laquelle présente un point de goutte de l'ordre de 40-41 °C, présente des propriétés bien spécifiques. Du fait de ces propriétés, cette stéarine peut être utilisée en remplacement des matières grasses concrètes exotiques et avec une proportion en outre moitié moindre que celle des matières qu'elle remplace, pour l'obtention de matières grasses tartinables qui présentent des propriétés de texture et organoleptiques similaires et parfaitement adaptées au marché.

En conséquence, un premier objet de l'invention porte sur un procédé de production d'une émulsion eau-dans-huile, de préférence du type matières grasses tartinables, dont la teneur en matière grasse est comprise entre 30 % et 70 % en poids par rapport au poids total de l'émulsion comprenant les étapes de :

(i) Préparation d'une phase grasse ;

(ii) Préparation d'une phase aqueuse ;

(iii) Incorporation de la phase aqueuse obtenue à l'étape (ii) dans la phase grasse obtenue à l'étape (i) sous agitation pour créer une émulsion ; et

(iv) Cristallisation de l'émulsion obtenue à l'étape (iii) ;

**où la phase grasse comprend** :

- aucune matière grasse concrète d'origine végétale « exotique » ;

- une huile végétale (HV) ;

- de la stéarine de Matière Grasse Laitière Anhydre (MGLA) (SB) présentant un point de goutte compris entre 37 et 45 °C ; de préférence entre 38 et 43 °C et, de manière particulièrement préférée entre 39 et 42 °C ; et

- du beurre ou de la MGLA (CB), de préférence de la MGLA,

Où le mélange (M) de (HV), de (SB) et de (CB) (à savoir (M) = (HV) + (SB) + (CB) = 100%) représente au moins 90 % en poids de la phase grasse, de préférence au moins 95 % de la phase grasse, avec :

1) La proportion (HV) allant de 20 à 75 % (en poids) du mélange (M), de préférence de 30 à 65 % ;

2) La proportion (SB) allant de 5 à 65 % (en poids) du mélange (M), de préférence de 10 à 40 % ;

3) La proportion (CB) allant de 5 à 65 % (en poids) du mélange (M), de préférence de 25 à 60 % ; et

4) La somme (SB) + (CB) allant de 25 à 80 % (en poids) du mélange (M), de préférence de 35 à 70 %.

Dans le cadre de ces recherches de formulations plus adaptées aux goûts du consommateur, des milliers de tentatives ont été exploré avec plus ou moins de succès. Dans ce cadre, le brevet EP 0 063 389 B1 cherchait, au début des années 1980, à produire une émulsion eau-dans-huile tartinable comprenant une quantité réduite en matières grasses laitières coûteuses et une quantité augmentée en huile végétale. C'est d'ailleurs à cette même époque qu'a été découvert l'intérêt des matières grasses de palme et de coprah pour l'obtention de formulations « allégées » (avec peu ou pas de beurre), celles-là même que les inventeurs ont cherché à remplacer. C'est ainsi que ce document décrit également l'utilisation d'une stéarine de beurre, laquelle est obtenue au terme d'un procédé de purification spécifique, et qui permet l'obtention d'émulsions eau-dans-huile tartinables à 84% de Matières Grasses (16% de phase aqueuse). Maintenant, ce document de plus de 40 ans ne décrivait à aucun moment la stéarine de beurre envisagée dans les formulations de l'invention, pas plus qu'il ne décrivait ni ne suggérait réellement l'obtention d'émulsions eau-dans-huile présentant des caractéristiques structurales et organoleptiques acceptables avec une phase aqueuse de plus de 30% et donc beaucoup moins de matières grasses.

A l'inverse, les inventeurs ont pu démontrer que l'ensemble des émulsions obtenues, dont les phases grasses sont telles que définies précédemment, présentent simultanément des propriétés physiques et organoleptiques les rendant particulièrement adaptées à un usage en tant que matière grasse tartinable.

En outre, les inventeurs ont mis en évidence qu'il était possible de réaliser une telle émulsion, avec ces mêmes propriétés de texture et organoleptiques, mais sans rajouter d'émulsifiant.

Avantageusement, la phase grasse ne comprend aucun émulsifiant au sens du règlement européen n °1333/2008 sur les additifs.

La présente invention est également relative à une émulsion eau-dans-huile susceptible d'être obtenue par un tel procédé.

Enfin, l'invention porte sur l'utilisation d'une stéarine de MGLA présentant un point de goutte compris entre 37 et 45°C pour la fabrication d'une émulsion eau-dans-huile ne comprenant aucune matière grasse concrète « exotique » d'origine végétale et telle que décrite précédemment.

## Description des figures

La figure 1 représente les profils endothermiques de MGLA et de stéarines de MGLA obtenues à différentes températures de fractionnement.

La figure 2 est une représentation géométrique (2D) des mélanges réalisés.

La figure 3 correspond au début de positionnement des courbes de même valeur (courbe d'isoréponses et dans une troisième dimension) de dureté (pour des valeurs de dureté choisies) de sorte à représenter les valeurs de dureté des mélanges en 2D.

La figure 4 est la représentation géométrique (2D) des mélanges réalisés intégrant les courbes d'isoréponses de dureté (0,9 à 10,90 N).

## Description détaillée de l'invention

Les émulsions eau-dans-huile obtenues par le procédé de l'invention sont comestibles.

Avantageusement, les émulsions eau-dans-huile et huile-dans-eau obtenues présentent une teneur en matière grasse comprise entre 40 et 60 % (en poids par rapport au poids total de l'émulsion) et, de préférence, entre 40 et 55 %.

Typiquement, le procédé de l'invention permet d'obtenir des émulsions eau-dans-huile de type matières grasses tartinables et, notamment, des margarines.

Par « matière grasse tartinable », on entend, un mélange d'eau et des matières grasses laitières, animales et/ou végétales, de préférence des matières grasses laitières et/ou végétales. Des exemples de telles matières grasses tartinables sont par exemple le beurre et la margarine. Les matières grasses tartinables selon l'invention pourront être consommées crues ou cuites du fait d'une utilisation pour la cuisson et/ou pour la pâtisserie.

Les matières grasses tartinables telles que définies par le règlement (CE) n°2991/94) sont des produits dont la teneur en matières grasses est de 10 % minimum et de 90 % maximum de leur poids total et qui gardent une consistance solide à 15 °C.

Les émulsions eau-dans-huile obtenues présentent une consistance solide à 15 °C.

Les émulsions eau-dans-huile obtenues présentent une dureté à 4 °C comprise entre 2 et 18 N, de préférence une dureté comprise entre 4 et 14 N et, de manière particulièrement préférée une dureté comprise entre 5 et 10 N.

Une telle valeur de dureté à 4 °C est déterminée simplement par l'homme du métier.

A titre d'exemple, une telle dureté est déterminée en utilisant une sonde cylindrique de 5 mm de diamètre, laquelle se situe à plus de 10 mm des parois latérales du contenant de l'échantillon (pour limiter les effets de bords) avec une pénétration de la sonde dans une longueur comprise entre 30 et 40 % de l'échantillon sans excéder une profondeur de 2 centimètres. Une telle dureté peut être déterminée notamment et comme dans les exemples avec une machine de mesure universelle AGS-X (SHIMADZU) avec en sus un paramétrage de la vitesse de pénétration de la sonde de 1 mm/s et une limitation de la course de la sonde au sein de l'échantillon limitée à 40 % de la hauteur de celui-ci. A noter également que, dans les exemples, l'échantillon est aliquoté dans un flacon de 60 mL d'une hauteur de 70 mm et d'un diamètre de 35 mm ; avec une hauteur d'échantillon d'environ 50 mm.

En lien avec les émulsions eau-dans-huile selon l'invention et pour une dureté (Y) donnée, leur composition peut être déterminée simplement par la formule suivante :

$$\text{Dureté (Y)} = -33{,}365(HV) - 94{,}443(CB) - 164{,}198(SB) + 321{,}254(HV * CB) + 522{,}337(HV * SB) + 1373{,}089(CB * SB) - 3465{,}38(HV * CB * SB)$$

Dans laquelle :

- la dureté (Y) est exprimée en Newton et (HV), (CB) et (SB) sont exprimés en pourcentage de leur mélange (M) (constitué des trois et avec 100 % égal à 1) ;

- (HV*CB) correspond à l'interaction entre l'huile végétale et le beurre ou la MGLA, et est égale à (HV) x (CB) ;

- (HV*SB) correspond à l'interaction entre l'huile végétale et la stéarine de MGLA, et est égale à (HV) x (SB) ;

- (CB*SB) correspond à l'interaction entre le beurre ou la MGLA et la stéarine de MGLA, et est égale à (CB) x (SB) ;

- (HV\*CB\*SB) correspond à l'interaction entre l'huile végétale, le beurre ou la MGLA, et la stéarine de MGLA, et est égale à (HV) x (CB) x (SB).

En lien avec la phase grasse et pour ce qui est des matières grasses concrètes « exotiques » d'origine végétale, on entend des matières grasses concrètes d'origine végétale obtenues à partir de cultures n'ayant pas été réalisées sur le continent Européen.

A titre d'exemple de telles matières grasses concrètes « exotiques » d'origine végétale, on peut citer celles obtenues à partir de la noix de coco (coprah), du fruit du palmier à huile (huile de palmiste ou huile de palme), de la fève de cacao (beurre de cacao), du fruit du sal ou sâla, de la noix d'arbres du genre *Shorea* de la famille des *Dipterocarpaceae* (beurre d'illipé), du fruit de *Garcinia indica* (beurre de kokum), ou encore du fruit du karité (beurre de karité) et leurs mélanges.

La MGLA (Matière Grasse Laitière Anhydre) est aussi connue sous le nom de beurre concentré (solide). Elle contient au moins 99,8 % de matière grasse laitière et a l'avantage de se conserver plus facilement que le beurre du fait de sa très faible teneur en eau.

Par stéarine d'une matière grasse, on entend la fraction de cette matière grasse se présentant sous forme solide en opposition avec la fraction de cette même matière grasse se présentant sous forme liquide de type oléine, laquelle est obtenue au terme d'un fractionnement. Typiquement, ce processus de fractionnement a lieu à une température allant de 20 à 32 °C, de préférence de 25 à 30 °C et typiquement aux environs de 30 °C. Eventuellement, ce processus de fractionnement peut comprendre plus d'une étape de fractionnement de sorte à enrichir la stéarine en Acides Gras Saturés (AGS).

Par « point de goutte » d'une matière grasse solide, on entend la température nécessaire à l'apparition de la première goutte. Un tel point de goutte peut être déterminé simplement par l'homme du métier, notamment en se référant à la norme internationale ISO 6299 qui prescrit une méthode pour la détermination du point de goutte d'une matière grasse concrète, pour un domaine de température étendu.

Typiquement, une telle stéarine de MGLA présente un pourcentage d'Acides Gras Saturés (AGS) supérieur ou égal à 65 % en poids (par rapport à son poids total), de préférence d'au moins 70 % en poids.

A titre d'exemple d'une telle stéarine disponible à titre commercial, on peut citer la MGLA41 (CORMAN).

Par « huile végétale », on entend une matière grasse liquide à 15 °C. Une telle huile végétale est choisie dans le groupe consistant en l'huile de tournesol, l'huile de colza, l'huile de maïs, l'huile de lin, l'huile d'olive, l'huile de chanvre (dont la teneur en delta9-tétrahydrocannabinol ($\Delta 9$ -THC) au seuil défini par le règlement (UE) 2022/1393 de la commission du 11 août 2022 modifiant le règlement (CE) no 1881/2006), leurs fractions, et/ou leurs mélanges, de préférence dans le groupe consistant en l'huile de tournesol, l'huile de colza et l'huile de lin et/ou leurs mélanges.

Les huiles végétales préférées comprennent des acides gras polyinsaturés (AGPI) essentiels tels que l'acide linoléique (LA) de la série Oméga-6, et l'acide alpha linolénique (ALA) de la série Oméga-3, précurseur de l'acide eicosapentaénoïque (EPA) et de l'acide docosahexaénoïque (DHA).

Selon un mode de réalisation préféré, l'huile végétale est de l'huile de colza.

Maintenant, il peut s'agir d'un mélange et l'huile végétale comprend alors de l'huile de colza dans une proportion allant de 20 à 100 % en poids (par rapport au poids total de l'huile végétale), de préférence de 50 à 100 % en poids et, de manière particulièrement préférée de 70 à 100 % en poids.

Dans le cas d'un tel mélange et de façon préférentielle, l'huile végétale pourra comprendre, outre l'huile de colza, de l'huile de tournesol et/ou de l'huile de lin.

Selon un autre mode de réalisation préféré, l'huile végétale est de l'huile de tournesol.

Maintenant, il peut s'agir d'un mélange dans lequel l'huile végétale comprend alors de l'huile de tournesol dans une proportion allant de 20 à 100 % en poids (par rapport au poids total de l'huile végétale), de préférence de 50 à 100 % en poids et, de manière particulièrement préférée de 70 à 100 % en poids.

Dans le cas d'un tel mélange et de façon préférentielle, l'huile végétale pourra comprendre, outre l'huile de tournesol, de l'huile de colza et/ou de l'huile de lin.

La phase grasse pourra également contenir d'autres composés hydrophobes tels que des sources d'acides gras Oméga-3 longue chaîne (ex : huiles de poissons ou de microalgues), des arômes, des émulsifiants, des colorants ou des vitamines dans une proportion n'excédant pas 10 % en poids (par rapport au poids total de la phase grasse), de préférence n'excédant pas 5 %.

Si la phase grasse peut comprendre un ou plusieurs émulsifiants pour favoriser la dispersion de la phase aqueuse dans la phase grasse à l'étape (iii) du procédé selon l'invention, les inventeurs ont mis en évidence que les propriétés de la phase grasse définies précédemment sont telles que l'émulsion obtenue présente une très bonne dispersion, de très bonnes propriétés organoleptiques et une très bonne stabilité sans nécessiter l'incorporation d'émulsifiant en sus.

Aussi, et selon un mode de réalisation préféré, la phase grasse ne comprend aucun émulsifiant au sens du règlement européen n°1333/2008 sur les additifs.

A ce titre, la phase grasse ne comprend aucun émulsifiant choisi dans le groupe consistant en la carboxyméthylcellulose sodique (E 466, gomme cellulosique), la carboxyméthylcellulose de sodium réticulée (E 468, gomme de cellulose réticulée), la carboxyméthylcellulose hydrolysée de manière enzymatique (E 469, gomme de cellulose hydrolysée de manière enzymatique), les sels de sodium, de potassium et de calcium d'acides gras (E 470a), les sels de magnésium d'acides gras (E 470b), les mono- et diglycérides d'acides gras (E 471) et leurs esters avec les esters acétiques des mono- et diglycérides d'acides gras (E 472a), les esters lactiques des mono- et diglycérides d'acides gras (E 472b), les esters citriques des mono- et diglycérides d'acides gras (E 472c), les esters tartriques des mono- et diglycérides d'acides gras (E 472d), les esters monoacétyltartriques et diacétyltartriques des mono- et diglycérides d'acides gras (E 472e) ou encore les esters mixtes acétiques et tartriques des mono- et diglycérides d'acides gras (E 472f), les sucroesters d'acides gras (E 473), les sucroglycérides (E474), les esters polyglycériques d'acides gras (E475), le polyricinoléate de polyglycérol (E 476), les esters de propane-1,2-diol d'acides gras (E477), l'huile de soja oxydée par chauffage ayant réagi avec des mono- et diglycérides d'acides gras (E 479b), le stéaroyl-2-lactylate de sodium (E 481), le stéaroyl-2-lactylate de calcium (E 482), le tartrate de stéaryle (E 483), le monostéarate de sorbitane (E 491), le tristéarate de sorbitane (E 492), le monolaurate de sorbitane (E 493), le monooléate de sorbitane (E 494) et le monopalmitate de sorbitane (E 495).

Maintenant et selon un mode de réalisation particulier, la phase grasse peut éventuellement comprendre des lécithines (E322), lesquelles jouent le rôle d'anti-éclaboussant dans la margarine. De préférence, la phase grasse ne comprend également aucune lécithine (E322).

L'étape (i) de préparation de la phase grasse est réalisée par des techniques bien connues de l'homme du métier et se fait typiquement sous agitation.

L'agitation est de préférence effectuée par un mélangeur à pâles ou par tout autre système permettant de répondre aux exigences du mélange.

La température de préparation est généralement comprise entre 50 et 70 °C, préférentiellement entre 55 et 65 °C.

Pour ce qui est cette fois la phase aqueuse, elle est principalement constituée d'eau pure.

Maintenant, la phase aqueuse peut aussi contenir d'autres composés hydrophiles tels que des arômes, des colorants, des texturants (ex : stabilisants, épaississants ou gélifiants), des conservateurs, des antioxydants, des vitamines, des régulateurs d'acidité et de pH, des protéines, des produits dérivés du lait (ex : babeurre, lactosérum, poudre de lait), des sucres ou encore des sels minéraux (sodium, calcium, magnésium, ...).

L'étape (ii) de préparation de la phase aqueuse est réalisée là encore par des techniques bien connues de l'homme du métier (ex : sous agitation). Typiquement, cette étape est réalisée avec un mélangeur à pâles ou par tout autre système permettant de répondre aux exigences du mélange (défloculeuse, hélice, ...).

La température de préparation est en général comprise entre 45 et 65 °C, préférentiellement entre 50 et 60 °C.

L'étape (ii) peut être réalisée en parallèle de l'étape (i), après celle-ci ou préalablement à celle-ci.

L'étape (iii) d'incorporation de la phase aqueuse dans la phase grasse est effectuée sous agitation forte pour réaliser une émulsion, par exemple à l'aide d'un agitateur à pâles ou par une injection en continu.

L'étape (iv) de cristallisation de l'émulsion correspond à un refroidissement de l'émulsion de sorte à permettre sa solidification.

Cette étape est réalisée par des techniques bien connues de l'homme du métier et peut intégrer un pré-refroidissement de l'émulsion (de sorte à obtenir un produit à une température inférieure à 50 °C, de préférence inférieure à 40 °C). En outre, cette étape peut intégrer une mise en pression de l'émulsion pour faciliter la cristallisation en continue de celle-ci (de l'ordre de 1 à 6 Mpa). De façon générale, l'émulsion effectue des passages successifs dans des échangeurs thermiques à surface raclée. Les passages dans les échangeurs thermiques sont entrecoupés de cycles de malaxage.

Finalement, la température de sortie de l'émulsion au terme de l'étape (iv) est comprise entre 5 et 20 °C, de préférence entre 10 et 15 °C.

Un deuxième objet de l'invention concerne les émulsions eau-dans-huile susceptibles d'être obtenues par le procédé décrit précédemment.

Avantageusement, l'émulsion eau-dans-huile ne comprend aucun émulsifiant au sens du règlement européen n °1333/2008 sur les additifs.

Ainsi, une telle émulsion eau-dans-huile ou huile-dans-eau ne comprend aucun émulsifiant choisi dans le groupe consistant en la carboxyméthylcellulose sodique (E 466, gomme cellulosique), la carboxyméthylcellulose de sodium réticulée (E 468, gomme de cellulose réticulée), la carboxyméthylcellulose hydrolysée de manière enzymatique (E469, gomme de cellulose hydrolysée de manière enzymatique), les sels de sodium, de potassium et de calcium d'acides gras (E470a), les sels de magnésium d'acides gras (E470b), les mono- et diglycérides d'acides gras (E471) et leurs esters avec les esters acétiques des mono- et diglycérides d'acides gras (E472a), les esters lactiques des mono- et diglycérides d'acides gras (E472b), les esters citriques des mono- et diglycérides d'acides gras (E472c), les esters tartriques des mono- et diglycérides d'acides gras (E472d), les esters monoacétyltartriques et diacétyltartriques des mono- et diglycérides d'acides gras (E472) ou encore les esters mixtes acétiques et tartriques des mono- et diglycérides d'acides gras (E472f), les sucroesters d'acides gras (E473), les sucroglycérides (E 474), les esters polyglycériques d'acides gras (E475), le polyricinoléate de polyglycérol (E476), les esters de propane-1,2-diol d'acides gras (E 477), l'huile de soja oxydée par chauffage ayant réagi avec des mono- et diglycérides d'acides gras (E479b), le stéaroyl-2-lactylate de sodium (E 481), le stéaroyl-2-lactylate de calcium (E482), le tartrate de stéaryle (E 483), le monostéarate de sorbitane (E491), le tristéarate de sorbitane (E492), le monolaurate de sorbitane (E493), le monooléate de sorbitane (E494) et le monopalmitate de sorbitane (E495).

Avantageusement encore, l'émulsion eau-dans-huile ne comprend aucune lécithine (E322).

Un troisième objet de l'invention concerne l'utilisation d'une stéarine de MGLA présentant un point de goutte compris entre 37 et 45 °C pour la fabrication d'une émulsion eau-dans-huile ne comprenant aucune matière grasse concrète « exotique » d'origine végétale.

De préférence, la stéarine de MGLA présente un point de goutte entre 38 et 43 °C et, de manière particulièrement préférée, entre 39 et 42 °C.

Les exemples qui suivent sont fournis à titre d'illustration et ne sauraient limiter la portée de la présente invention.

**Exemples**

**I. Obtention et caractérisation d'une stéarine de MGLA**

*Fractionnement mécanique de MGLA à l'échelle laboratoire*

Dans le cadre de cette recherche, les inventeurs ont procédé à de multiples fractionnements mécaniques de la MGLA de sorte à caractériser de nouvelles matières premières de compositions distinctes avec un point de goutte propre.

Ces fractionnements mécaniques ont été réalisés à différentes températures (21 °C, 26 °C, 30 °C) de sorte à séparer la fraction oléine (liquide) de la fraction stéarine (solide) à chacune de ces températures.

En vue de préciser les caractéristiques de chacune des stéarines obtenues, il a été procédé à la détermination de leur dureté à 4 °C *via* la machine de mesure universelle AGS-X (SHIMADZU), équipée d'une sonde cylindrique de 5 mm de diamètre. La sonde utilisée a pénétré 40 % de la hauteur de l'échantillon à la vitesse de 1 mm/s. L'ensemble des échantillons sont aliquotés dans des flacons transparents de 60 mL QUALIOACTT, d'une hauteur de 70 mm et d'un diamètre de 35 mm, avant d'être placés à 4 °C. Les échantillons représentent une hauteur d'environ 50 mm par rapport au flacon.

Le détail des mesures de dureté pour les différentes stéarines de MGLA est listé dans le tableau I ci-après.

Le comportement thermique des différentes stéarines a été analysé plus avant par calorimétrie différentielle à balayage (Differential Scanning Calorimetry (DSC)) à l'aide du TA Discovery DSC 2500 (TA INSTRUMENTS). Pour se faire, l'appareil a été calibré en fonction de l'enthalpie avec de l'indium dont la température de fusion est de 156,60°C. Les échantillons (environ 10 mg) ont été scellés dans des récipients hermétiques TZERO en aluminium et un récipient vide a été utilisé comme référence. Le système a été purgé à l'azote. L'analyse a été faite en partant da la température de -80 °C avec une étape de chauffage jusqu'à 80 °C à une vitesse de 5 °C/min. Les résultats sont analysés avec le logiciel TRIOS V5.0 (TA INSTRUMENTS).

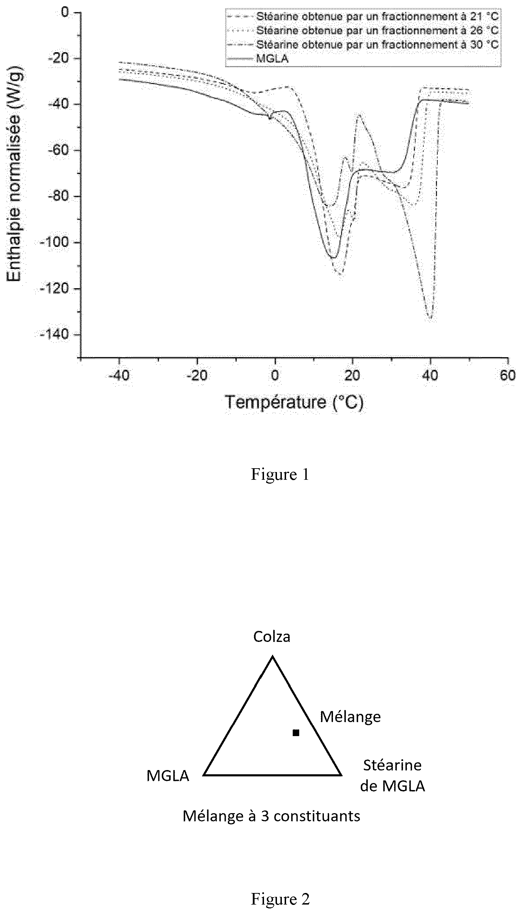

Les profils endothermiques obtenus sont présentés dans la figure 1.

A partir de ces résultats, il a également été possible de déterminer le point de goutte des différentes stéarines. Pour cela, les valeurs de points de goutte sont obtenues en intégrant les signaux endothermiques afin d'obtenir la valeur qui représente 95 % de la fraction fondue pour chaque matière grasse concrète comme décrit dans VINCENT et al. (Energy & Fuels, vol.31 (10), p :11489-11494, 2017).

Le détail des points de goutte déterminés pour les différentes stéarines de MGLA est listé dans le tableau I ci-après (et également des mesures de dureté comme précisé précédemment). A titre de contrôle, les valeurs de dureté de la MGLA, du coprah et de la stéarine de karité sont indiquées.

Tableau 1

| Matière grasse concrète | Point de goutte (°C) | Dureté à 4 °C (N) |
|---|---|---|
| MGLA | 32,44 | 53,37 |
| Stéarine de MGLA avec fractionnement à 21 °C | 21,58 | 96,56 |
| Stéarine de MGLA avec fractionnement à 26 °C | 36,40 | 130,06 |
| Stéarine de MGLA avec fractionnement à 30 °C | 40,44 | 152,09 |
| Coprah | 23,94 | $\geq 200$ |
| Stéarine de karité | 32,51 | $\geq 200$ |

Les résultats montrent qu'une dureté de plus de 100 N est obtenue avec la stéarine présentant un point de goutte de 36 °C, et même une dureté de près de 150 N pour la stéarine présentant un point de goutte d'environ 40 °C. Maintenant, ces valeurs de dureté restent inférieures à celles du coprah ou de la stéarine de karité.

Maintenant, les résultats montrent également que si la MGLA et les stéarines de MGLA présentant des points de goutte à environ 21 et 36 °C, présentent des profils de changement d'enthalpie très proches, le profil de la stéarine de MGLA présentant un point de goutte à environ 40 °C est très différent. Pour cette dernière, les résultats montrent un changement d'enthalpie nettement plus marqué aux alentours de 40 °C, laquelle température approche celle de la mise en bouche.

*Formulations de margarine à partir de stéarine de MGLA obtenue par fractionnement*

A la lueur des propriétés de la stéarine présentant un point de goutte aux environs de 40 °C (notamment par rapport à celles présentant des points de goutte de 31 et 36 °C), et pour mieux caractériser celle-ci, les inventeurs ont réalisé différents essais de formulation d'émulsions eau-dans-huile intégrant cette dernière.

Le procédé pour réaliser les margarines était le suivant :

Phase grasse :

1- Les différentes huiles et matières grasses concrètes sont chauffées à 55 °C dans une cuve thermostatée sous agitation.

2- Une montée progressive à la température de 80 °C est réalisée (au moins 5 minutes) avant d'initier une étape de pasteurisation à 90 °C et pendant 20 secondes.

3- Une étape de refroidissement permet de revenir à la température de 55 °C.

Phase aqueuse :

Parallèlement, la phase aqueuse additionnée des différents additifs et constituants est chauffée à la température de 55 °C pendant 20 à 30 minutes sous agitation pour permettre une hydratation complète des différents constituants additionnés dont certains étaient sous forme pulvérulente.

Emulsification :

Les phases aqueuse et grasse (avec une phase aqueuse représentant 48 % du poids total de l'émulsion et la phase grasse représentant elle 52 % du poids total de l'émulsion) sont mélangées à 55 °C de sorte à obtenir une émulsion (1500 rpm, 6 minutes).

Cristallisation :

L'émulsion est refroidie progressivement sous agitation (malaxage) jusqu'à la température de 12-14 °C.

Le produit obtenu est alors mis en barquettes puis en chambre froide à 4-6 °C pour la phase de cristallisation et ceci pendant 24 à 48h.

La composition des phases grasses (par rapport au poids total de l'émulsion) pour certaines émulsions testées est détaillée dans le tableau 2 ci-après ; lesquelles émulsions intègrent, à titre de contrôle, une émulsion intégrant du coprah et de la stéarine de karité.

Tableau 2

| Matière grasse | Margarine témoin (g/100g de produit) | Margarine testée (g/100g de produit) |
|---|---|---|
| Huile de colza | 24,88 | 24,88 |
| Coprah | 10,15 | - |
| Beurre | 14,80 | 14,80 |
| Stéarine de karité | 3,20 | - |

(suite)

| Matière grasse | Margarine témoin (g/100g de produit) | Margarine testée (g/100g de produit) |
|---|---|---|
| Stéarine de MGLA | - | 13,35 |

La phase grasse comprenait également un émulsifiant E471 composé de mono- et de diglycérides pour environ 1 % en poids (par rapport au poids de la phase grasse), ainsi que du β-carotène à titre de colorant.

*Préparation de l'émulsion eau-dans-huile*

La phase aqueuse, quant à elle, était composée en majeure partie d'eau avec également du sel alimentaire, du lait écrémé en poudre, du sorbate de potassium et de l'acide lactique.

La préparation de la phase aqueuse a lieu dans une cuve équipée d'un agitateur.

La phase grasse, quant à elle, est réalisée dans une cuve adaptée pour les phases visqueuses.
La phase aqueuse est incorporée modérément dans la phase grasse, sous agitation, de manière à fabriquer l'émulsion.
L'émulsion ainsi formée est pasteurisée de manière à éliminer les germes pouvant altérer la stabilité microbiologique du produit fini. Le traitement thermique est réalisé dans un échangeur à surface raclée.

*Cristallisation de l'émulsion eau-dans-huile*

La cristallisation et le malaxage ont lieu successivement. Le produit passe par des cylindres de refroidissement à surface raclée afin d'amorcer la cristallisation. La régulation des températures est automatisée.
Le refroidissement, entrecoupé d'étapes de malaxage, est réalisé par des cylindres dont les doigts s'entrecroisent pour favoriser l'homogénéisation du produit et l'initiation de la cristallisation.

La cristallisation se poursuit pendant plusieurs jours à 4 °C.

*Dureté des émulsions obtenues*

En vue de préciser les caractéristiques de chacune des émulsions obtenues, la dureté de chacune d'entre elles a été déterminée *via* la machine de mesure universelle AGS-X (SHIMADZU) comme décrit précédemment.
Il en est ressorti que, si la margarine témoin présentait une dureté attendue de l'ordre de 6 N à 4 °C, la margarine intégrant cette fois la stéarine présentant un point de goutte d'environ 40 °C révélait une dureté à 4 °C bien supérieure, de l'ordre de 8,5 N, alors même que cette stéarine présentait seule une dureté moindre que les composants qu'elle remplace là (cf. tableau 1). Finalement, il a été possible d'obtenir une margarine présentant une dureté similaire à celle de la margarine témoin, mais en divisant par deux la proportion de stéarine présentant un point de goutte à environ 40 °C (par rapport à celles des matières grasses concrètes exotiques utilisées dans la margarine témoin).

*Qualités organoleptiques des émulsions obtenues*

Organoleptiquement, la margarine à base de stéarine de MGLA avec le point de goutte approchant les 40 °C a présenté une texture intéressante en bouche, laquelle se rapprochait du beurre. De même, l'arôme de beurre s'est montré plus prononcé et perceptible, dans cette margarine par rapport au témoin.
Différents essais en utilisant cette même formulation ont été réalisées avec des taux de matières grasses variant entre 30 et 70%. Ces essais ont démontré que cette formulation présentait ces mêmes propriétés structurales et organoleptiques d'intérêt sur ce spectre avec une quasi-stabilité sur l'intervalle 40 à 60% de matières grasses.

*Intérêt de la stéarine de MGLA à point de goutte de l'ordre de 40 °C.*

Au final et de façon inattendue, les résultats ont montré que les propriétés (physiques et organoleptiques) de cette stéarine de MGLA lui ont permis de remplacer efficacement les matières grasses concrètes dites « exotiques » (telles que le coprah et la stéarine de karité) pour la formulation de matières grasses tartinables au contenu allégé en matières grasses. Il est à noter que les propriétés de cette stéarine lui ont permis, au-delà du seul remplacement de ces matières grasses concrètes « exotiques », d'être utilisée en quantités moindres que celles-ci pour obtenir des propriétés physiques et organoleptiques similaires (la dureté).

## II. Caractérisation des mélanges utilisant cette stéarine

Pour réaliser cette caractérisation, un plan de mélanges comportant trois constituants (huile de colza, MGLA et MGLA41 (Stéarine de MGLA présentant un point de goutte de 41 °C commercialisée par CORMAN) a été réalisé à l'aide du logiciel NEMRODW en utilisant comme base, les essais paillasses de laboratoire de fractionnement de la MGLA. Dans le détail, une matrice de DOEHLERT autour d'un mélange dont les proportions connues des trois constituants, a été réalisée avec contraintes. Les limites du domaine expérimental ont été celles détaillées dans le tableau 3, lequel donne les proportions des trois constituants majeurs (MGLA, huile végétale et stéarine de MGLA) au sein de la phase grasse. Une représentation géométrique du domaine expérimental des mélanges a été réalisée comme illustrée à la figure 2.

Tableau 3

| Matière grasse | Bornes des proportions testées (en % de la phase grasse) |
|---|---|
| Huile de colza | 39 à 74 |
| MGLA | 16 à 50 |
| MGLA41 | 10 à 44 |

La matrice d'expériences a conduit à la formulation d'une multitude de mélanges en vue de déterminer précisément l'influence de chacun de ces 3 constituants et les interactions entre eux, notamment sur la fermeté. Pour se faire, la dureté à 4° C pour chacune de ces formulations a été déterminée comme précédemment avec la machine de mesure universelle AGS-X (SHIMADZU).

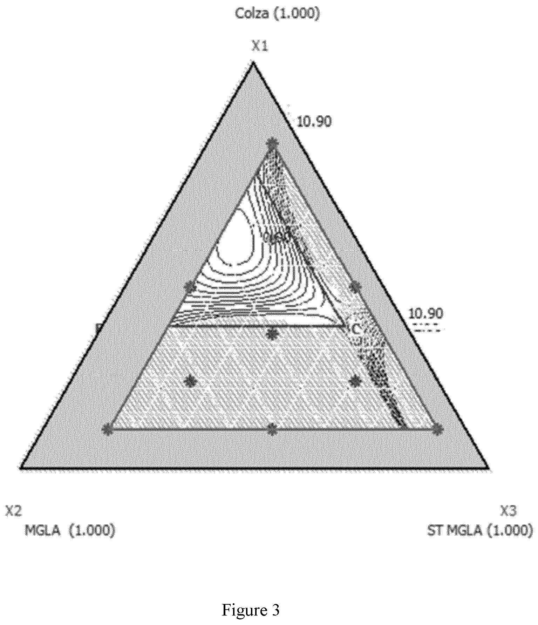

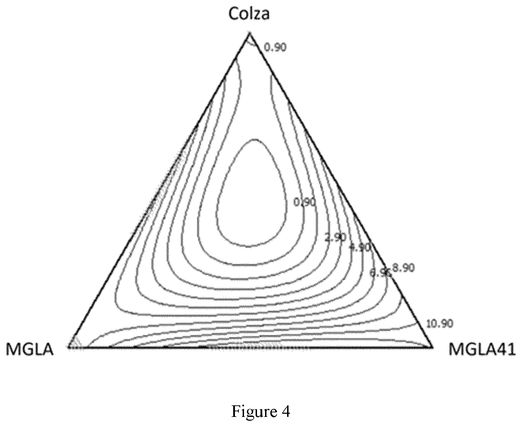

Les résultats de fermeté à 4 °C ont ensuite été intégrés à la représentation géométrique des mélanges dans une dimension complémentaire, comme illustré en figure 3. Au final, le traitement de l'ensemble des résultats a permis d'aboutir à une représentation géométrique détaillée en figure 4 illustrant la dureté des différents mélanges (avec des courbes d'isoréponses 2D obtenues par la méthode des surfaces de réponses).

Au final, les résultats ont permis de déterminer les différents mélanges de ces 3 constituants majeurs, sans aucune matière grasse concrète d'origine exotique mais uniquement une stéarine de MGLA particulière, permettant d'obtenir (avec une significativité de 0,01%) une margarine présentant, outre les propriétés organoleptiques souhaitées, une dureté (Y) exprimée en newton (N), souhaitée à 4°C (en fonction de la texture recherchée) en résolvant l'équation de modèle cubique centrée répondant à la formule suivante :

Dureté (Y) = - 33,365(HV) - 94,443 (CB) - 164,198 (SB) + 321,254 (HV * CB) + 522,337(HV * SB) + 1373,089 (CB * SB) - 3465,38 (HV * CB * SB)

Dans laquelle

(Tableau 4)

| Composant | Valeur |
|---|---|
| (HV) : Proportion d'huile végétale par rapport au mélange (M) de l'huile végétale, de la MGLA et de la stéarine de MGLA) | en pourcentage avec (M)=1 (correspond à 100%) |
| (CB) : Proportion de MGLA par rapport au mélange (M) de l'huile végétale, de la MGLA et de la stéarine de MGLA) | en pourcentage avec (M)=1 (correspond à 100%) |
| (SB) : Proportion de la stéarine de MGLA par rapport au mélange (M) de l'huile végétale, de la MGLA et de la stéarine de MGLA) | en pourcentage avec (M)=1 (correspond à 100%) |
| (HV*CB) : interaction entre l'huile végétale et la MGLA | (HV) x (CB) |
| (HV*SB) : interaction entre l'huile végétale et la stéarine de MGLA | (HV) x (SB) |
| (CB*SB) : interaction entre la MGLA et la stéarine de MGLA | (CB) x (SB) |
| (HV*CB*SB) : interaction entre l'huile végétale, la MGLA et la stéarine de MGLA | (HV) x (CB) x (SB) |

La formulation de différentes émulsions ont permis de confirmer que cette formule permet de prédire la fermeté obtenue, et permet donc d'obtenir des émulsions présentant, outre les qualités organoleptiques, la dureté et donc la texture recherchée.

Outre l'obtention d'émulsions présentant des qualités organoleptiques d'intérêts, les inventeurs ont pu montrer que cette stéarine peut être utilisée en quantité pratiquement deux fois moindre que ces matières concrètes d'origine « exotique » pour obtenir une même fermeté à 4 °C.

### III. Caractérisation des mélanges

Dans le cadre des différentes expérimentations et à titre exploratoire, les inventeurs ont été amenés à faire varier la concentration en émulsifiants (E471) pour connaître son impact éventuel sur la dureté des émulsions.

C'est dans ce contexte et de manière inattendue que les inventeurs ont observé que cette intégration d'émulsifiant s'est montrée sans effet significatif sur la dureté des margarines obtenues, alors même que celle-ci a normalement des effets importants sur celle-ci.

A la vue des premiers résultats, les inventeurs ont testé plus largement différents mélanges des constituants majeurs avec et sans émulsifiants.

Les résultats ont montré qu'à proportion similaire des 3 constituants majeurs, la dureté était similaire, de même que la stabilité et les propriétés organoleptiques.

Finalement, les inventeurs ont pu montrer que l'utilisation de cette stéarine pour l'obtention d'émulsion eau-dans-huile tartinable permet de se passer d'émulsifiants.

### Revendications

**1.** Un procédé de production d'une émulsion eau-dans-huile, de préférence de type matière grasse tartinable, dont la teneur en matière grasse est comprise entre 30 % et 70 % en poids par rapport au poids total de l'émulsion, comprenant les étapes de :

(i) Préparation d'une phase grasse ;
(ii) Préparation d'une phase aqueuse ;
(iii) Incorporation de la phase aqueuse obtenue à l'étape (ii) dans la phase grasse obtenue à l'étape (i) sous agitation pour créer une émulsion ; et
(iv) Cristallisation de l'émulsion obtenue à l'étape (iii)

**Caractérisé en ce que la phase grasse comprend** :

◦ aucune matière grasse concrète d'origine végétale « exotique » ;
◦ une huile végétale (HV) ;
◦ de la stéarine de Matière Grasse Laitière Anhydre (MGLA) (SB) présentant un point de goutte compris entre 37 et 45 °C ; et
◦ du beurre ou de la MGLA (CB);

Où le mélange (M) de (HV), de (SB) et de (CB) représente au moins 90 % en poids de la phase grasse avec :

1) La proportion (HV) allant de 20 à 75 % (en poids) du mélange (M),
2) La proportion (SB) allant de 5 à 65 % (en poids) du mélange (M),
3) La proportion (CB) allant de 5 à 65 % (en poids) du mélange (M), et
4) La somme (SB) + (CB) allant de 25 à 80 % (en poids) du mélange (M).

**2.** Le procédé selon la revendication précédente, **caractérisé en ce que** la teneur en matière grasse de l'émulsion eau-dans-huile est comprise entre 40 % et 60 % en poids par rapport au poids total de l'émulsion.

**3.** Le procédé selon l'une quelconque des revendications précédentes, **caractérisé en ce que** la teneur en matière grasse de l'émulsion eau-dans-huile est comprise entre 40 % et 55 % en poids par rapport au poids total de l'émulsion.

**4.** Le procédé selon l'une quelconque des revendications précédentes, **caractérisé en ce que** la stéarine de Matière Grasse Laitière Anhydre (MGLA) (SB) présentant un point de goutte compris entre 38 et 43 °C.

**5.** Le procédé selon l'une quelconque des revendications précédentes, **caractérisé en ce que** la stéarine de Matière Grasse Laitière Anhydre (MGLA) (SB) présente un point de goutte compris entre 39 et 42 °C.

**6.** Le procédé selon l'une quelconque des revendications précédentes, **caractérisé en ce que** la matière grasse concrète d'origine végétale « exotique » est choisie parmi celles obtenues à partir de la noix de coco (ex : coprah), du fruit du palmier à huile (ex : huile de palmiste ou huile de palme), de la fève de cacao (ex : beurre de cacao), du fruit du sal ou sâla, de la noix d'arbres du genre *Shorea* de la famille des *Dipterocarpaceae* (ex : beurre d'illipé), du fruit de *Garcinia indica* (ex : beurre de kokum), et du fruit du karité (ex : beurre de karité) et leurs mélanges.

**7.** Le procédé selon l'une quelconque des revendications précédentes , **caractérisé en ce que** l'huile végétale est choisie dans le groupe consistant en l'huile de tournesol, l'huile de colza, l'huile de maïs, l'huile de lin, l'huile d'olive, l'huile de chanvre (dont la teneur en delta9-tétrahydrocannabinol (Δ9-THC) au seuil défini par le règlement (UE) 2022/1393 de la commission du 11 août 2022 modifiant le règlement (CE) no 1881/2006), leurs fractions, et leurs mélanges.

**8.** Le procédé selon l'une quelconque des revendications précédentes, **caractérisé en ce que** l'huile végétale comprend de l'huile de colza dans une proportion allant de 20 à 100 % en poids (par rapport au poids total de l'huile végétale), de préférence de 50 à 100 % en poids et, **en ce qu'**elle peut comprendre, outre l'huile de colza, de l'huile de tournesol et/ou de l'huile de lin.

**9.** Le procédé selon l'une quelconque des revendications précédentes, **caractérisé en ce qu'**il est destiné à la production d'une émulsion eau-dans-huile présentant une dureté à 4 °C comprise entre 2 et 18 N et **en ce que** la composition de l'émulsion, en fonction de sa dureté (Y) exprimée en newton (N), peut être déterminée selon la formule suivante Dureté (Y) = - 33,365(HV) - 94,443 (CB) - 164,198 (SB) + 321,254 (HV * CB) + 522,337(HV * SB) + 1373,089 (CB * SB) - 3465,38 (HV * CB * SB) dans laquelle :

1) la Dureté est exprimée en Newton (N) et (HV), (CB) et (SB) sont exprimés en pourcentage de leur mélange (M) (avec 100% égal à 1) ;
2) (HV*CB) correspond à l'interaction entre l'huile végétale et le beurre ou la MGLA, et est égale à (HV) x (CB) ;
3) (HV*SB) correspond à l'interaction entre l'huile végétale et la stéarine de MGLA, et est égale à (HV) x (SB) ;
4) (CB*SB) correspond à l'interaction entre le beurre ou la MGLA et la stéarine de MGLA, et est égale à (CB) x (SB) ; et
5) (HV*CB*SB) correspond à l'interaction entre l'huile végétale, le beurre ou la MGLA, et la stéarine de MGLA, et est égale à (HV) x (CB) x (SB).

**10.** Le procédé selon l'une quelconque des revendications précédentes, **caractérisé en ce que** la phase grasse ne comprend aucun émulsifiant au sens du règlement européen n°1333/2008 sur les additifs.

**11.** Le procédé selon la revendication précédente, **caractérisé en ce que** la phase grasse ne comprend aucun émulsifiant choisi dans le groupe consistant en la carboxyméthylcellulose sodique (E466, gomme cellulosique), la carboxyméthylcellulose de sodium réticulée (E468, gomme de cellulose réticulée), la carboxyméthylcellulose hydrolysée de manière enzymatique (E469, gomme de cellulose hydrolysée de manière enzymatique), les sels de sodium, de potassium et de calcium d'acides gras (E470a), les sels de magnésium d'acides gras (E470b), les mono- et diglycérides d'acides gras (E471) et leurs esters avec les esters acétiques des mono- et diglycérides d'acides gras (E472a), les esters lactiques des mono- et diglycérides d'acides gras (E472b), les esters citriques des mono- et diglycérides d'acides gras (E472c), les esters tartriques des mono- et diglycérides d'acides gras (E472d), les esters monoacétyltartriques et diacétyltartriques des mono- et diglycérides d'acides gras (E472e) ou encore les esters mixtes acétiques et tartriques des mono- et diglycérides d'acides gras (E472f), les sucroesters d'acides gras (E473), les sucroglycérides (E474), les esters polyglycériques d'acides gras (E475), le polyricinoléate de polyglycérol (E476), les esters de propane-1,2-diol d'acides gras (E477), l'huile de soja oxydée par chauffage ayant réagi avec des mono- et diglycérides d'acides gras (E479b), le stéaroyl-2-lactylate de sodium (E481), le stéaroyl-2-lactylate de calcium (E482), le tartrate de stéaryle (E483), le monostéarate de sorbitane (E 491), le tristéarate de sorbitane (E 492), le monolaurate de sorbitane (E493), le monooléate de sorbitane (E494) et le monopalmitate de sorbitane (E495).

**12.** Une émulsion eau-dans-huile susceptible d'être obtenue par le procédé défini à l'une quelconque des revendications précédentes et dont la teneur en matière grasse est comprise entre 30 % et 70 % en poids par rapport au poids total de l'émulsion, avec une phase grasse comprenant :

• aucune matière grasse concrète d'origine végétale « exotique » ;
• une huile végétale (HV) ;
• de la stéarine de Matière Grasse Laitière Anhydre (MGLA) (SB) présentant un point de goutte compris entre 37 et 45 °C ; de préférence entre 38 et 43 °C et, de manière particulièrement préférée entre 39 et 42 °C ; et
• du beurre ou de la MGLA (CB);

Où le mélange (M) de (HV), de (SB) et de (CB) représente au moins 90 % en poids de la phase grasse avec :

1) La proportion (HV) allant de 20 à 75 % (en poids) du mélange (M),
2) La proportion (SB) allant de 5 à 65 % (en poids) du mélange (M),
3) La proportion (CB) allant de 5 à 65 % (en poids) du mélange (M),
4) La somme (SB) + (CB) allant de 25 à 80 % (en poids) du mélange (M).

**13.** Une émulsion eau-dans-huile selon la revendication précédente, dont la teneur en matière grasse est comprise entre 40 % et 60 % en poids par rapport au poids total de l'émulsion.

**14.** Une émulsion eau-dans-huile selon la revendication précédente, dont la teneur en matière grasse est comprise entre 40 % et 55 % en poids par rapport au poids total de l'émulsion.

**15.** Une utilisation d'une stéarine de MGLA présentant un point de goutte compris entre 37 et 45 °C pour la fabrication d'une émulsion eau-dans-huile ne comprenant aucune matière grasse concrète « exotique » d'origine végétale telle que définie à la revendication précédente, laquelle émulsion eau-dans-huile a une teneur en matière grasse comprise entre 30 % et 70 % en poids par rapport au poids total de l'émulsion et une phase grasse qui comprend :

• aucune matière grasse concrète d'origine végétale « exotique » ;
• une huile végétale (HV) ;
• de la stéarine de Matière Grasse Laitière Anhydre (MGLA) (SB) présentant un point de goutte compris entre 37 et 45 °C ; de préférence entre 38 et 43 °C et, de manière particulièrement préférée entre 39 et 42 °C ; et
• du beurre ou de la MGLA (CB);

Où le mélange (M) de (HV), de (SB) et de (CB) représente au moins 90 % en poids de la phase grasse avec :

1) La proportion (HV) allant de 20 à 75 % (en poids) du mélange (M),
2) La proportion (SB) allant de 5 à 65 % (en poids) du mélange (M),
3) La proportion (CB) allant de 5 à 65 % (en poids) du mélange (M),
4) La somme (SB) + (CB) allant de 25 à 80 % (en poids) du mélange (M).

Figure 1

Figure 2

Figure 3

Figure 4

## RAPPORT DE RECHERCHE EUROPEENNE

Europäisches Patentamt
European Patent Office
Office européen des brevets

**Numéro de la demande**

EP 25 18 9662

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 063 389 A1 (UNILEVER NV [NL]; UNILEVER PLC [GB]) 27 octobre 1982 (1982-10-27) * revendications; exemples 1-3 * ----- | 1-15 | INV. A23D7/00 A23D7/05 |
| A | HUI ET AL: "Bailey's Industrial Oil and Fat Products, Vol 4", 1 janvier 1996 (1996-01-01), BAILEY'S INDUSTRIAL OIL AND FAT PRODUCTS. EDIBLE OIL AND FAT PRODUCTS : GENERAL APPLICATIONS, NEW YORK,NY : JOHN WILEY, US, XP002138558, ISBN: 978-0-471-59424-6 * alinéa [05.3]; tableau 10.6 * ----- | 1-15 | |
| A | DEFFENSE E: "MILK FAT FRACTIONATION TODAY: A REVIEW1", JOURNAL OF THE AMERICAN OIL CHEMISTS' SOCIETY, SPRINGER BERLIN HEIDELBERG, vol. 70, no. 12, 1 décembre 1993 (1993-12-01), pages 1193-1201, XP000416952, ISSN: 0003-021X, DOI: 10.1007/BF02564225 * figure 11 * ----- | 1-15 | DOMAINES TECHNIQUES RECHERCHES (IPC) A23D |
| X | EP 0 393 739 A2 (UNILEVER NV [NL]; UNILEVER PLC [GB]) 24 octobre 1990 (1990-10-24) * le document en entier * ----- | 1-15 | |
| X | JP 2007 060913 A (KANEKA CORP) 15 mars 2007 (2007-03-15) * le document en entier * ----- | 1-15 | |

Le présent rapport a été établi pour toutes les revendications

| Lieu de la recherche | Date d'achèvement de la recherche | Examinateur |
|---|---|---|
| La Haye | 28 octobre 2025 | Saettel, Damien |

## ANNEXE AU RAPPORT DE RECHERCHE EUROPEENNE
## RELATIF A LA DEMANDE DE BREVET EUROPEEN NO.

EP 25 18 9662

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2025

| Document brevet cité au rapport de recherche | Date de publication | Membre(s) de la famille de brevet(s) | Date de publication |
|---|---|---|---|
| EP 0063389 A1 | 27-10-1982 | AT E7843 T1 | 15-06-1984 |
| | | AU 546889 B2 | 26-09-1985 |
| | | CA 1175284 A | 02-10-1984 |
| | | EP 0063389 A1 | 27-10-1982 |
| | | FI 71053 B | 14-08-1986 |
| | | FR 2502903 A1 | 08-10-1982 |
| | | IE 53028 B1 | 11-05-1988 |
| | | JP S6218130 B2 | 21-04-1987 |
| | | JP S57177650 A | 01-11-1982 |
| | | NL 8101639 A | 01-11-1982 |
| | | US 4438149 A | 20-03-1984 |
| | | ZA 822299 B | 30-11-1983 |
| EP 0393739 A2 | 24-10-1990 | AT E97551 T1 | 15-12-1993 |
| | | AU 637793 B2 | 10-06-1993 |
| | | CA 2014816 A1 | 20-10-1990 |
| | | DE 69004728 T2 | 24-03-1994 |
| | | EP 0393739 A2 | 24-10-1990 |
| | | ZA 903006 B | 24-12-1991 |
| JP 2007060913 A | 15-03-2007 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2407797
- EP 0063389 B1
- EP 13332008 A

**Littérature non-brevet citée dans la description**

- **HUI et al.** Bailey's Industrial Oil and Fat Products,. *Edible Oil and Fat Products : General Applications*, 1996, vol. 4, 491-568
- **VINCENT et al.** *Energy & Fuels*, 2017, vol. 31 (10), 11489-11494